# EUROPEAN PATENT SPECIFICATION

(11) **EP 4 532 443 B1**
(45) Date of publication and mention of the grant of the patent: **29.04.2026**
(21) Application number: 22754773.4
(22) Date of filing: 01.06.2022
(51) Int. Cl.: C04B 28/26, C04B 40/02, B28B 3/02, B28B 3/04, B28B 3/22, B28B 11/24, B28C 5/16

(54) **METHOD AND COMPOSITION FOR PRODUCTION OF GRANULAR COMPOSITE PANELS**
VERFAHREN UND ZUSAMMENSETZUNG ZUR HERSTELLUNG VON GRANULÄREN VERBUNDPLATTEN
PROCÉDÉ ET COMPOSITION POUR LA PRODUCTION DE PANNEAUX COMPOSITES GRANULAIRES

(43) Date of publication of application: 09.04.2025
(73) Proprietor: DECIBEL AD, 2140 Botevgrad (BG)
(72) Inventor: NEDKOV, Tsvetan, 2161 Pravets (BG)
(74) Representative: Ilarionov, Pavko Jordanov
(86) International application number: PCT/BG2022/050003
(87) International publication number: WO 2023/230676

(56) References cited:
- WO-A1-2007/117225
- WO-A1-2017/053125
- WO-A1-2017/066065
- DE-A1- 2 323 659
- US-A1- 2013 291 762

## Description

### TECHNICAL FIELD

The invention relates to a method and composition for production of granular composite panels and will find application in the construction field, in particular for thermal insulation, sound absorption and fire and antifungal protection of residential and public buildings.

### BACKGROUND ART

US 20070112098 A1 discloses a composite granular panel and a method for its production. The composite-granular panel thereof consists of perlite, impregnator, adhesive cement and water. The separate ingredients are stored in four tanks in the following order: perlite, impregnator, cement and water. In the production process of the panels, first the perlite and the impregnator are mixed and then the cement and the water are added. The mixture thus obtained is stirred and poured into molds, made of wood, metal or plastic. The drying of the panels in the molds is carried out under normal weather conditions for 1 to 4 days. An additional accelerator can be used for faster hardening of the mixture, or it can be fired in a heat oven. The obtained panel is brittle and crumbly and therefore reinforcing fibers of glass, plastic or metal can be added to the mixture during the production. This known composite panel can be used for heat and sound insulation, as well as for the construction of partition walls. The known method of production uses wet processes and the period of drying and hardening is relatively long. When firing samples, very often the adhesive on the surface of the panel hardens quickly, while the core remains liquid, which leads to defects in the quality and strength of the panel.

US 5964934 A describes a method for production of acoustic panels containing perlite. The panels have good sound-absorbing and heatinsulating properties and are installed on suspended metal structures on ceilings. The acoustic panels contain expanded perlite, which can be used in the process of water felting to make ceiling panels. The water felting process involves the formation of a water dispersion comprising expanded perlite, cellulose fibers and preferably a secondary binder such as starch with sufficient water to make the dispersion liquid. The water dispersion is poured onto a moving support net, where it forms a sludge that is dehydrated by a combination of gravitational and vacuum dehydration. The dehydrated mass is then pressed (with or without additional vacuum) to a certain thickness to form a pad. The pressing further dehydrates the pad. The pad is then placed in a drying oven where the moisture in it is reduced to less than 5% and preferably less than 1% in the final product. In a preferred embodiment, the composition may further include mineral fibers and a clay filler. The expanded perlite, used in the composition of this invention, must be treated to reduce its tendency to retain water. The invention is not limited to any specific amounts of materials. The panels, produced by this method, remain relatively fragile and brittle. The need of additional impregnation of the expanded perlite complicates the production process and increases the costs.

US 4313997A discloses a method for production of perlite slabs by bonding perlite particles with an adhesive resin. The dried slabs have a constant thickness. The method for production of expanded perlite slabs with a thickness greater than 25.4 mm includes the following steps: adding an adhesive resin emulsion to the expanded perlite to obtain a mixture, drying the mixture and forming panels from the dried mixture. If necessary, the process further comprises the steps of mixing glass fibers and / or diluted asphalt emulsion with the expanded perlite and drying the mixture of asphalt emulsion and expanded perlite before adding the adhesive emulsion. For the production of panels from such a composition, the perlite particles are expanded in a conventional expander by a continuous thermal heating process at a temperature of 900 to 1150°C. The expanded perlite particles are collected in the expander and transported pneumatically in a conveying air duct. At an appropriate point in the air duct, fibers are constantly injected into the system. Further after the expander, at a point where the temperature of the perlite is below the melting temperature of the asphalt, a diluted asphalt emulsion may optionally be injected into the stream of perlite or perlite fibers. Downstream at a point, where the perlite-asphalt mixture has dried significantly and the temperature is low enough to avoid the decomposition of the adhesive resin, the adhesive resin emulsion and optionally a silicone emulsion, are injected into the flowing, pneumatically transported stream of perlite and fibers through one or more spray nozzles. The heat from the perlite expansion is used to dry the composition. The dried composition can then be placed on a pressure conveyor to form a panel. In this production method, fibers and impregnating asphalt are added to the perlite particles while they have not yet cooled completely after the expansion process. This makes the walls of the perlite particles brittle, which in turn leads to easy destruction of the finished slab, making it easily breakable.

A common feature of the above methods is that they are high energy methods due to the use of perlite particles, which increases the cost of the produced granular composite panels.

A production method, using gypsum, acrylic or bitumen and water as an adhesive for expanded obsidian granules is also known in the art. To speed up the bonding process, a thermal heating in an oven at a temperature of 220-240° C for about 40-50 minutes is used. In this method, the finished product is brittle, easily breakable, and during the heat firing, the acrylic/bitumen seals the panel around the perimeter, but the moisture in the core cannot evaporate. As a result, the panel remains more fragile at its core and often breaks precisely in this area, where the moisture has not completely evaporated.

WO 2007/117225 A1 discloses a method for manufacturing of inorganic filling for panel core characterized in that the appropriate share of additives and sodium or potassium-sodium water glass as adhesive is added to expanded perlite, wherein the compacted panels are exposed to microwave field in order to clearly accelerate process of meshing of said water glass.

### SUMMARY OF THE INVENTION

The object of the invention is to provide a method for production of granular composite panels with a minimum amount of additives such as impregnators and reinforcing components, which degrade the thermal insulation, sound-absorbing and fire-insulating properties of the panel. Another object of the invention is to apply a low energy method for activating of the expanded particles adhesion process.

The method for production of granular composite panels, according to the present invention, includes the following steps in the specified sequence:
- selection of expanded obsidian granules by means of a vibrating sift table into two fractions, the first with a grain size of 5-8 mm and the second with a grain size of 0.63-5 mm;
- filling the expanded obsidian silo with one of the two fractions and filling a silicate adhesive tank with silicate adhesive, to which cornstarch was added and mixed;
- mixing the expanded obsidian granules with the silicate-based adhesive with added cornstarch in a planetary mixer, whereas the adhesive is injected through nozzles, where the viscosity of the adhesive according to Brookfield is in the range between 16 500 - 19 200 mPa.s;
- stirring the resulting mixture for 30 - 45 s at a temperature of 18 - 22°C;
- the stirred mixture is poured into a mold or fed via an auger to the pressure shafts, which compress it to 1.1-1.2 of the thickness of the uncompressed mixture and determine the thickness of the future panel, and if the mixture is poured into a mold, a pressure applies on the poured mixture with compression from 1.1-1.2 of the volume of the mixture for 5-15 seconds;
- after the compression, the mixture is placed in a chamber with magnetrons and a rotating reflector that emit electromagnetic waves with a frequency in the microwave range between 915 MHz to 2.45 GHz and a power up to 2400 w, whereas the duration of the electromagnetic activation of the adhesive process is between 360-480 s;
- processing and trimming of the panel at the edges and shaping it in the desired form with different sizes in length, width and height;
- formatting and packaging of the panels.

In this method the silicate-based adhesive is used, comprising of disodium oxide - 15-20 wt % **(wt % in the present invention is percentage by weight),** silicone dioxide - 60-80 wt %, water - 3-6 wt % and starch 2-5 wt %.

In one embodiment of the invention, the composition for the production of granular composite panels includes the following components in the specified ratios: 15-20 wt % fraction of expanded obsidian with grain size of 5-8 mm; 50-80 wt % silicate adhesive and cornstarch, equal to 8 - 12 wt % of the silicate adhesive.

In another embodiment of the invention, the composition for the production of granular composite panels includes the following components in the specified ratios: a fraction of expanded obsidian with a grain size of 0.63 - 5 mm from 18 - 33 wt %, 60 - 75 wt % silicate adhesive and 3 - 5 wt % cornstarch.

After the trimming, an additional layer of silicate adhesive (150 g/m²) is applied to the granular composite panels in order to reduce the hygroscopicity and increase the strength characteristics thereof, whereby the silicate adhesive is applied by nozzle injection and subjected to electromagnetic radiation with a power of 800 w for 120-180 seconds. Between 200 - 250 gr/m² of silicone or acrylic-based paint is applied to the finished panels through nozzles with a pressure of 3-4 bar.

The proposed method for production of granular composite panels is without use of additional materials such as impregnators and reinforcing components, which degrade the thermal insulation, sound-absorbing and fire-insulating properties of the panel. The proposed method for activating the adhesion process of the expanded particles is low energy and easy to implement.

### BRIEF DESCRIPTION OF DRAWINGS

The present invention is illustrated by the accompanying figures, where:
- **Figure 1** shows the production technological sequence of granular composite panel from expanded obsidian;
- **Figure 2** represents a schematic for application of non-swelling polyurethane adhesive for mounting a granular composite panel on a wall or ceiling.

### MODE(S) FOR CARRYING OUT THE INVENTION

The method for production of granular composite panels includes the following processes in the specified sequence:
After crushing, the obsidian is sifted by means of a vibrating sift table and sorted into two fractions, the one with a grain size of 5-8 mm and the other - with a grain size of 0.63-5 mm.

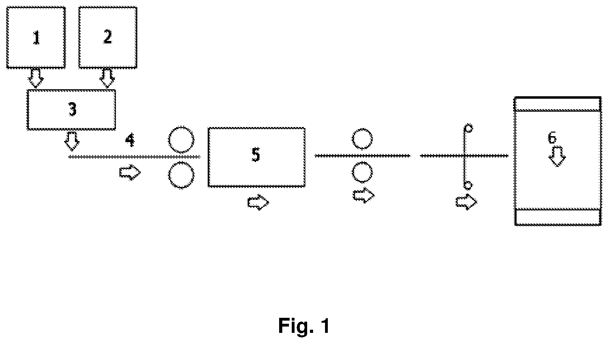

This is followed by filling the expanded obsidian silo 1 (**Fig. 1****)** with the corresponding fraction and filling the silicate adhesive tank 2, whereby a starch is already added and mixed to the silicate adhesive.

The composition of the used silicate adhesive includes:
- 15-20 wt % disodium oxide;
- 60-80 wt % silicon dioxide;
- 3-6 wt % water; and
- 2-5 wt % starch.

This is followed by mixing the expanded obsidian granules with a silicate-based adhesive with an addition of starch, which is carried out in a planetary mixer 3. Silicate adhesive is sprayed through nozzles. The viscosity of the adhesive according to Brookfield is in the range between 16,500 - 19,200 mPa.s.

When the grain size of the used obsidian is 5 to 8 mm, the mixing ratio is 15-20 wt % fraction of expanded obsidian with grain size of 5-8 mm, 50-80 wt% silicate adhesive and cornstarch, equal to 8 - 12 wt % of the silicate adhesive.

When the grain size of the used obsidian is 0.63 to 5 mm, the composition contains 18-33 wt % fraction of expanded obsidian with grain size of 0.63-5 mm, 60-75 wt % silicate adhesive and 3-5 wt % cornstarch.

The mixture is stirred for 30 to 45 seconds. After the mixture has been stirred, it is poured into a mold or fed through an auger to pressure shafts 4, which compress it with an average of 1.1 - 1.2 of the volume of the uncompressed mixture and determine the thickness of the future panel.

If the mixture is poured into a mold, a pressure is applied on the poured mixture with a compression between 1.1 to 1.2 of the mixture volume. The pressing lasts between 5-15 seconds.

After the compression, the mixture is placed in a chamber with two magnetrons and a rotating reflector 5 that emit electromagnetic waves with a frequency in the microwave range between 915 MHz to 2.45 GHz and power of up to 2400 w. The duration of the electromagnetic activation of the adhesive process is between 360- 480 s.

Once the adhesive is structured, the panel is trimmed at the edges and given a uniform shape of different sizes.

After the panels are formatted, they are arranged in packages 6.

An additional layer of silicate adhesive (about 150 g/m²) may be applied on the already cut panels in order to reduce the hygroscopicity and increase the strength characteristics thereof, whereby the silicate adhesive is applied by nozzle injection and subjected to electromagnetic radiation with a power of 800 w for 120-180 seconds. The application of the adhesive is done twice - after the first layer has dried, the second layer is applied.

Between 200 - 250 gr/m² of silicone or acrylic-based paint may be applied on the finished panels through nozzles with a pressure of 3-4 bar. The panel can be painted in different colors to have the desired decorative features.

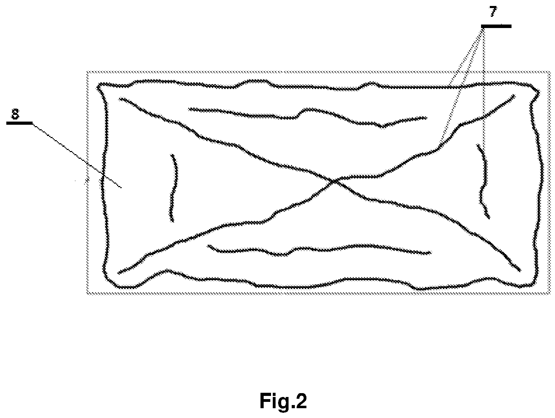

The panel can be glued directly on walls and ceilings, using polyurethane non-swelling adhesive 7 (**Fig.2**). The gluing is done by applying the adhesive 7 on the back of the panel 8 - on the perimeter of the panel and on two diagonal stripes on its back area. The thickness of the adhesive seam during its application is between 5 and 10 mm, and the distance between the adhesive seam and the perimeter of the panel is between 10-20 mm. Before pressing the panel against the wall or ceiling, it must be waited for the adhesive to make a sealing crust. The waiting period depends on the ambient temperature - at a temperature of 5°C it is 40 - 45 seconds, at 20°C - 30 seconds and at 35°C - 20 seconds. The panel 8 is then pressed against the surface for about 2 - 2.5 minutes.

The sound-absorbing properties, thermal conductivity, mechanical properties and the antifungal properties of panel samples, obtained by the proposed method, have been tested.

First was tested a panel with a thickness of 30 mm and a volume weight of 60 kg/m³, being a composition of 1 part by weight fraction with a grain size of the expanded obsidian from 5-8 mm, with an air gap between the granules 0.5-3 mm, obtained after compression to 1.1 to 1.2 of the volume of the mixture; 2 parts by weight silicate adhesive and 0.2 parts by weight starch. The sound-absorbing properties were measured with an impedance tube with two microphones. The obtained results are presented in **Table 1.**

**Table 1**

| Frequency **Hz** | 50 | 63 | 125 | 250 | 500 | 1000 | 2000 | 4000 | 8000 |
|---|---|---|---|---|---|---|---|---|---|
| Sound absorption coefficient **Alpha** | 0.015 | 0.02 | 0.07 | 0.13 | 0.53 | 1.04 | 1.00 | 0.98 | 0.99 |

In the present example, the thermal conductivity coefficient λ of the panel was measured with a heat flow meter. The coefficient of thermal conductivity λ = 0.038 W.mK has been established.

The mechanical properties of the panel from the above example are: compressive strength 1.40 N/mm² (+/- 10%), bending strength 0.56 N/ mm² (+/- 10%), tensile strength 0.14 N/mm² (+/- 10%) and dynamic modulus 910 N/mm2 (+/- 10%).

The result of the test against the spread of fungi and molds shows that the panel allows a spread of up to 10% of the sample area.

In the second example, a panel produced with the following composition was tested: 1 part by weight fraction with a grain size of the expanded obsidian from 0.63-5 mm, with an air gap between the granules 0.1-1 mm, obtained after compression to 1.1 to 1.2 of the volume of the mixture; 2.6 parts by weight silicate adhesive and 0.6 parts by weight starch.

The thickness of the panel is 50 mm. The volume weight of the obtained sample is 90 kg/m^{3.} The sound-absorbing properties were measured with an impedance tube with two microphones. The obtained results are presented in **Table 2.**

**Table 2**

| Frequency **Hz** | 50 | 63 | 125 | 250 | 500 | 1000 | 2000 | 4000 | 8000 |
|---|---|---|---|---|---|---|---|---|---|
| Sound absorption coefficient **Alpha** | 0.025 | 0.028 | 0.11 | 0.57 | 1.22 | 0.97 | 1.08 | 1.02 | 1.01 |

The thermal conductivity coefficient λ of the panel was measured with a heat flow meter.

The mechanical properties of the panel from the second example are: compressive strength 1.65 N/mm² (+/- 10%), bending strength 0.66 N/ mm² (+/- 10%), tensile strength 0.18 N/mm² (+/- 10%) and dynamic modulus 945 N/mm² (+/- 10%).

The result of the test against the spread of fungi and molds shows that the panel allows a spread of up to 10% of the sample area.

## Claims

1. A method for production of granular composite panels, **characterized in that** it includes the following operations in the specified sequence:
- selection of expanded obsidian granules by means of a vibrating sift table into two fractions, the first with a grain size of 5-8 mm and the second with a grain size of 0.63-5 mm;
- filling the expanded obsidian silo (1) with one of the two fractions and filling a silicate adhesive tank (2) with silicate adhesive, to which cornstarch was added and mixed;
- mixing the expanded obsidian granules with the silicate-based adhesive with added cornstarch in a planetary mixer (3), whereas the adhesive is injected through nozzles, and the viscosity of the adhesive according to Brookfield is in the range between 16 500 - 19 200 mPa.s;
- stirring the obtained mixture for 30 - 45 s at a temperature of 18 - 22°C;
- the stirred mixture is poured into a mold or fed via an auger to pressure shafts (4), which compress it to 1.1-1.2 of the thickness of the uncompressed mixture and determine the thickness of the future panel, and if the mixture is poured into a mold, a pressure applies on the poured mixture with a compression from 1.1-1.2 of the volume of the mixture for 5-15 seconds;
- after the compression, the mixture is placed in a chamber with magnetrons and a rotating reflector (5), that emit electromagnetic waves with a frequency in the microwave range between 915 MHz to 2.45 GHz and a power up to 2400 w, whereas the duration of the electromagnetic activation of the adhesive process is between 360-480 s;
- processing and trimming of the panel at the edges and shaping it in the desired form with different sizes in length, width and height;
- formatting and packaging of the panels.

2. A method for production of granular composite panels, according to claim 1, wherein the silicate adhesive consists of: 15-20 wt % disodium oxide, 60-80 wt % silicon dioxide, 3-6 wt % water and 2-5 wt % starch.

3. A method for production of granular composite panels according to claim 1, **characterized in that** an additional layer of silicate adhesive (150 g/m²) is applied to the already cut panels in order to reduce the hygroscopicity and increase the strength characteristics thereof, whereby the silicate adhesive is applied by nozzle injection and subjected to electromagnetic radiation with a power of 800 w for 120-180 seconds.

4. A method for production of granular composite panels according to claim 1, **characterized in that** between 200 - 250 gr/m² of silicone or acrylic-based paint is applied on the finished panels through nozzles with a pressure of 3-4 bar.

5. A composition for production of granular composite panels, **characterized in that** it includes the following components in the specified ratios: 15-20 wt % fraction of expanded obsidian with grain size of 5-8 mm; 50-80 wt % silicate adhesive and cornstarch, equal to 8 - 12 wt % of the silicate adhesive.

6. A composition for production of granular composite panels, **characterized in that** it includes the following components in the specified ratios: 18-33 wt % fraction of expanded obsidian with grain size of 0,63-5 mm; 60-75 wt % silicate adhesive and 3-5 wt % cornstarch.

## Patentansprüche

1. Verfahren zur Herstellung von körnigen Verbundplatten, **dadurch gekennzeichnet, dass** es folgende Arbeitsschritte in der angegebenen Reihenfolge umfasst:
- Auswahl von expandierten Obsidiangranulaten mittels eines Rüttelsiebtisches in zwei Fraktionen, wobei die erste eine Korngröße von 5-8 mm und die zweite eine Korngröße von 0,63-5 mm aufweist;
- Befüllen des Silos für expandierten Obsidian (1) mit einer der beiden Fraktionen und Befüllen eines Silikatklebstofftanks (2) mit Silikatklebstoff, dem Maisstärke zugesetzt und beigemischt wird;
- Mischen des expandierten Obsidiangranulats mit dem Silikatkleber mit zugesetzter Maisstärke in einem Planetenmischer (3), wobei der Kleber durch Düsen eingespritzt wird und die Viskosität des Klebers nach Brookfield im Bereich zwischen 16.500 und 19.200 mPa.s liegt;
- Rühren der erhaltenen Mischung für 30 bis 45 Sekunden bei einer Temperatur von 18 bis 22 °C;
- die gerührte Mischung wird in eine Form gegossen oder über eine Förderschnecke zu Druckschäften (4) befördert, die sie auf 1,1 bis 1,2 der Dicke der unkomprimierten Mischung komprimieren und die Dicke der zukünftigen Platte bestimmen, und wenn die Mischung in eine Form gegossen wird, wird auf die gegossene Mischung 5 bis 15 Sekunden lang ein Druck mit einer Kompression von 1,1 bis 1,2 des Volumens der Mischung ausgeübt;
- nach der Kompression wird die Mischung in eine Kammer mit Magnetrons und einem rotierenden Reflektor (5) gegeben, die elektromagnetische Wellen mit einer Frequenz im Mikrowellenbereich zwischen 915 MHz und 2,45 GHz und einer Leistung von bis zu 2400 W aussenden, wobei die Dauer der elektromagnetischen Aktivierung des Klebevorgangs zwischen 360 und 480 s liegt.
- Bearbeitung und Beschnitt der Platte an den Kanten und Formung in die gewünschte Form mit unterschiedlichen Abmessungen in Länge, Breite und Höhe;
- Formatieren und Verpacken der Platten.

2. Verfahren zur Herstellung von körnigen Verbundplatten gemäß Anspruch 1, wobei der Silikatklebstoff aus 15 bis 20 Gew.-% Dinatriumoxid, 60 bis 80 Gew.-% Siliciumdioxid, 3 bis 6 Gew.-% Wasser und 2 bis 5 Gew.-% Stärke besteht.

3. Verfahren zur Herstellung von körnigen Verbundplatten gemäß Anspruch 1, **dadurch gekennzeichnet, dass** eine zusätzliche Schicht Silikatkleber (150 g/m²) auf die bereits geschnittenen Platten aufgetragen wird, um deren Hygroskopizität zu verringern und deren Festigkeitseigenschaften zu erhöhen, wobei der Silikatkleber durch Düseninjektion aufgetragen und 120-180 Sekunden lang einer elektromagnetischen Strahlung mit einer Leistung von 800 W ausgesetzt wird.

4. Verfahren zur Herstellung von körnigen Verbundplatten gemäß Anspruch 1, **dadurch gekennzeichnet, dass** zwischen 200 und 250 g/m² Farbe auf Silikon- oder Acrylbasis mit einem Druck von 3 bis 4 bar durch Düsen auf die fertigen Platten aufgetragen wird.

5. Eine Zusammensetzung zur Herstellung von körnigen Verbundplatten, **dadurch gekennzeichnet, dass** sie folgende Komponenten in den angegebenen Verhältnissen enthält: 15-20 Gew.-% Anteil an expandiertem Obsidian mit einer Korngröße von 5-8 mm; 50-80 Gew.-% Silikatkleber und Maisstärke, entsprechend 8-12 Gew.-% des Silikatklebers.

6. Eine Zusammensetzung zur Herstellung von körnigen Verbundplatten, **dadurch gekennzeichnet, dass** sie folgende Komponenten in den angegebenen Verhältnissen enthält: 18-33 Gew.-% expandierter Obsidian mit einer Korngröße von 0,63-5 mm; 60-75 Gew.-% Silikatkleber und 3-5 Gew.-% Maisstärke.

## Revendications

1. Procédé de fabrication de panneaux composites granulaires, **caractérisé en ce qu'**il comprend les opérations suivantes dans l'ordre indiqué:
- sélection de granulés d'obsidienne expansée à l'aide d'une table vibrante en deux fractions, la première avec une granulométrie de 5 à 8 mm et la seconde avec une granulométrie de 0,63 à 5 mm ;
- remplissage du silo d'obsidienne expansée (1) avec l'une des deux fractions et remplissage d'un réservoir d'adhésif silicate (2) avec de l'adhésif silicate, auquel de la fécule de maïs a été ajoutée et mélangée ;
- mélange des granulés d'obsidienne expansée avec l'adhésif à base de silicate additionné de fécule de maïs dans un mélangeur planétaire (3), l'adhésif étant injecté par des buses et la viscosité de l'adhésif selon Brookfield étant comprise entre 16 500 et 19 200 mPa.s ;
- agitation du mélange obtenu pendant 30 à 45 secondes à une température de 18 à 22 °C ;
- le mélange agité est versé dans un moule ou acheminé par une vis sans fin vers des arbres de pression (4), qui le compriment à 1,1-1,2 de l'épaisseur du mélange non comprimé et déterminent l'épaisseur du futur panneau, et si le mélange est versé dans un moule, une pression est appliquée sur le mélange versé avec une compression de 1,1-1,2 du volume du mélange pendant 5 à 15 secondes;
- après la compression, le mélange est placé dans une chambre équipée de magnétrons et d'un réflecteur rotatif (5), qui émettent des ondes électromagnétiques d'une fréquence comprise dans la gamme des micro-ondes entre 915 MHz et 2,45 GHz et d'une puissance pouvant atteindre 2400 W, la durée de l'activation électromagnétique du processus d'adhésion étant comprise entre 360 et 480 s;
- traitement et découpe des bords du panneau et mise en forme selon l' e souhaitée avec différentes dimensions en longueur, largeur et hauteur ;
- formatage et emballage des panneaux.

2. Procédé de fabrication de panneaux composites granulaires, selon la revendication 1, dans lequel l'adhésif silicate est composé de : 15 à 20 % en poids d'oxyde disodique, 60 à 80 % en poids de dioxyde de silicium, 3 à 6 % en poids d'eau et 2 à 5 % en poids d'amidon.

3. Procédé de fabrication de panneaux composites granulaires selon la revendication 1, **caractérisé en ce qu'**une couche supplémentaire d'adhésif silicate (150 g/m²) est appliquée sur les panneaux déjà découpés afin de réduire leur hygroscopicité et d'augmenter leurs caractéristiques de résistance, l'adhésif silicate étant appliqué par injection à l'aide d'une buse et soumis à un rayonnement électromagnétique d'une puissance de 800 W pendant 120 à 180 secondes.

4. Procédé de fabrication de panneaux composites granulaires selon la revendication 1, **caractérisé en ce qu'**entre 200 et 250 g/m² de peinture à base de silicone ou d'acrylique est appliquée sur les panneaux finis à l'aide de buses à une pression de 3 à 4 bars.

5. Composition pour la production de panneaux composites granulaires, **caractérisée en ce qu'**elle comprend les composants suivants dans les proportions spécifiées : 15 à 20 % en poids d'obsidienne expansée d'une granulométrie de 5 à 8 mm ; 50 à 80 % en poids d'adhésif silicate et d'amidon de maïs, équivalant à 8 à 12 % en poids de l'adhésif silicate.

6. Composition pour la fabrication de panneaux composites granulaires, **caractérisée en ce qu'**elle comprend les composants suivants dans les proportions indiquées : 18 à 33 % en poids d'obsidienne expansée d'une granulométrie de 0,63 à 5 mm ; 60 à 75 % en poids d'adhésif silicate et 3 à 5 % en poids de fécule de maïs.
